(19) Europäisches Patentamt
European Patent Office
Office européen des brevets

(11) **EP 2 017 642 B1**

(12) **FASCICULE DE BREVET EUROPEEN**

(45) Date de publication et mention
de la délivrance du brevet:
**15.06.2011 Bulletin 2011/24**

(51) Int Cl.:
**G01S 7/292** *(2006.01)*

(21) Numéro de dépôt: **08159136.4**

(22) Date de dépôt: **26.06.2008**

(54) **Procédé de détection et de mesure de paramètres de signaux radioélectriques**

Verfahren zur Erfassung und Messung von Parametern von Funksignalen

Method for detecting and measuring parameters of radioelectric signals

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **17.07.2007 FR 0705159**

(43) Date de publication de la demande:
**21.01.2009 Bulletin 2009/04**

(73) Titulaire: **Thales**
**75008 Paris (FR)**

(72) Inventeurs:
• **De Ligny, Paul**
**78960, VOISINS LE BRETONNEUX (FR)**
• **Sperling, Raphaël**
**75015, PARIS (FR)**

(74) Mandataire: **Lucas, Laurent Jacques**
**Marks & Clerk France**
**Conseils en Propriété Industrielle**
**Immeuble " Visium "**
**22, avenue Aristide Briand**
**94117 Arcueil Cedex (FR)**

(56) Documents cités:
**EP-A- 0 261 779    US-A- 5 121 413
US-A- 5 451 956**

## Description

L'invention concerne un procédé de détection et de mesures des paramètres de signaux radioélectriques. En particulier, l'invention s'applique aux récepteurs numériques de guerre électronique adaptés à l'interception de signaux émis par des radars.

Un récepteur numérique de guerre électronique doit être en mesure d'intercepter simultanément le plus grand nombre possible de signaux correspondant à des menaces et analyser ces signaux Les performances des fonctions de détection conditionnent les performances en sensibilité du récepteur. Les performances des fonctions de mesure des paramètres des impulsions compris dans les signaux radioélectriques interceptés se répercutent dans les performances du récepteur dans les fonctions de désentrelacement, de classification et d'identification des menaces ( plus le nombre de paramètres mesurés est important, meilleure est l'identification ).

Du fait des progrès des technologies de conversion Analogique-Numérique, en particulier l'augmentation de la dynamique et l'accroissement de la fréquence d'échantillonnage, les bandes instantanées traitées par un récepteur numérique sont de plus en plus larges et le nombre de signaux impulsionnels présents dans la bande instantanée augmente également. Un récepteur numérique doit donc traiter en temps réel ce flot croissant d'informations, maximiser la sensibilité, caractériser au mieux les impulsions interceptées, tout en limitant l'encombrement et la consommation des fonctions de détection et de mesure, facteurs primordiaux notamment pour les applications embarquées aéronautiques et spatiales.

Les récepteurs numériques de guerre électronique selon l'état de l'art dissocient généralement les fonctions de détection des fonctions de mesure. La fonction de détection, généralement mise en oeuvre matériellement, commande le déclenchement de l'enregistrement d'un signal reçu lorsque le niveau de celui-ci révèle la présence d'impulsions pertinentes, comme par exemple des impulsions émises par un radar. Le signal est alors stocké dans des mémoires tampon. La fonction de mesure des paramètres des impulsions pertinentes identifiées et stockées par la fonction de détection peut être mise en oeuvre soit par un programme d'ordinateur embarqué sur une carte de traitement soit matériellement par des opérateurs spécifiques réalisés dans des composants de type ASIC (Application Specific Integrated Circuite) ou FPGA (Field Programmable Gate Array).

Dans le cas d'une mise en oeuvre de la fonction de mesure par un programme d'ordinateur, les traitements réalisés sont nombreux et permettent des mesures de paramètres dans l'impulsion même, comme par exemple la fréquence précise de celle-ci et les modulations employées. Cependant, afin d'assurer le traitement en temps réel des impulsions reçus, il est nécessaire de multiplier le nombre de cartes de traitement en parallèle, chaque carte ne traitant qu'une portion temporelle du signal acquis.

Dans le cas d'une mise en oeuvre de la fonction de mesure par un matériel dédié, les traitements peuvent être réalisés en temps réel. Cependant ceux-ci sont limités par les capacités intrinsèques à la technologie matérielle employée. En particulier, le nombre d'impulsions pertinentes traitées simultanément est borné, les paramètres mesurés sont en nombre limité et ne permettent pas une bonne identification des menaces car les paramètres dans l'impulsion, comme la fréquence précise et les modulations, ne peuvent pas être mesurés.

En conséquence, les récepteurs numériques de guerre électronique selon l'état de l'art :

- soit, n'atteignent des performances acceptables qu'au prix d'un encombrement élevé (capacité mémoire importante pour l'enregistrement du signal ; capacité de calcul importante pour l'extraction des paramètres) interdisant leur utilisation pour des applications embarquées à faible volume et/ou faible consommation (aéronautique et spatiale notamment) ;
- soit, respectent un encombrement compatible avec les applications embarquées, mais sont limitées en nombre de paramètres mesurés dans l'impulsion.

Une demande de brevet EP 0 261 779 A divulgue un récepteur vidéo à cristal pour ondes entretenues et impulsions.

L'invention a notamment pour but de pallier les inconvénients précités. A cet effet, l'invention a pour objet un procédé de détection et de mesure des paramètres d'un signal radioélectrique échantillonné $Z_n$. Chaque valeur $PdB_n$ des échantillons $Z_n$ du signal radioélectrique est comparée à un seuil de détection. Le critère de détection, relatif à la présence d'une impulsion dans le signal radioélectrique, est rempli lorsque la valeur $PdB_n$ des échantillons $Z_n$ est supérieure ou égale au seuil de détection. Chaque valeur $PdB_n$ des échantillons $Z_n$ du signal radioélectrique est comparée à un seuil d'extinction. Le critère d'extinction étant rempli lorsque la valeur $PdB_n$ des échantillons $Z_n$ est inférieure au seuil d'extinction. Lorsque le critère de détection est rempli, un seuil de mesure est défini à un niveau donné en dessous du niveau de puissance maximum NivMax de l'impulsion. Le niveau de puissance maximum NivMax est recherché sur un nombre donné de valeurs $PdB_n$ des échantillons $Z_n$ à partir du premier échantillon dont le niveau de puissance a dépassé le seuil de détection. Une impulsion synthétique est générée comportant un ensemble d'informations et de mesures caractérisant chaque impulsion reçue. Les mesures sont effectuées sur une période débutant au premier échantillon ayant passé le seuil de mesure et s'achevant au dernier échantillon N au-dessus du seuil de mesure avant que le critère d'extinction soit rempli.

Dans un mode de réalisation, le seuil de détection est obtenu en additionnant d'une part un paramètre REF_BRUIT indiquant la valeur du bruit référencé à 0 dB et d'autre part un paramètre DELTA_SEUIL_DETECTION. Le seuil d'extinction est obtenu en additionnant le paramètre REF_BRUIT et un paramètre DELTA_SEUIL_EXTINCTION.

L'impulsion synthétique peut notamment comporter un ensemble d'informations et de mesures caractérisant l'impulsion parmi :

- la date de début de l'impulsion ;
- la durée de l'impulsion ;
- la somme des puissances instantanées sur la durée de l'impulsion ;
- la somme des carrés des puissances instantanées sur la durée de l'impulsion ;
- la somme des incréments de phase sur la durée de l'impulsion ;
- la somme des carrés des incréments de phase sur la durée de l'impulsion ;
- la valeur minimale sur la durée de l'impulsion de la somme glissante des incréments de phase ;
- la valeur maximale sur la durée de l'impulsion de la somme glissante des incréments de phase ;
- le nombre total de sauts de phase sur la durée de l'impulsion ;
- le nombre d'états de phase pendant la durée de l'impulsion ;
- la durée minimale sur la durée de l'impulsion entre deux sauts de phase consécutifs ;
- un indicateur de passage sous le seuil de mesure.

Les impulsions synthétiques dont la valeur de durée d'impulsion DI est inférieure à un paramètre VAL-DI-MIN peuvent être supprimées. Les impulsions synthétiques dont la valeur de niveau moyen est inférieure à un paramètre SEUIL_TRI_IS_NIV peuvent être supprimées.

L'invention a notamment pour avantages qu'elle est particulièrement adaptée aux applications embarquées dans le domaine aéronautique et spatial notamment. De plus, sa mise en oeuvre, impliquant un faible encombrement technologique, permet sa duplication pour pouvoir traiter un grand nombre de signaux différents simultanément. Enfin, dans son implémentation matérielle, l'invention permet de minimiser la latence des traitements. Ce paramètre est important dans de nombreux systèmes de guerre électronique, en particulier pour les récepteurs d'alerte.

D'autres caractéristiques et avantages de l'invention apparaîtront à l'aide de la description qui suit faite en regard des dessins annexés qui représentent :

- la figure 1, un diagramme d'un signal radioélectrique comportant une impulsion pertinente ;
- la figure 2, un synoptique, d'un mode de réalisation du procédé selon l'invention de détection et de mesure des paramètres de signaux radioélectriques;
- la figure 3, un synoptique d'un dispositif de détection et de mesures des paramètres de signaux radioélectriques.

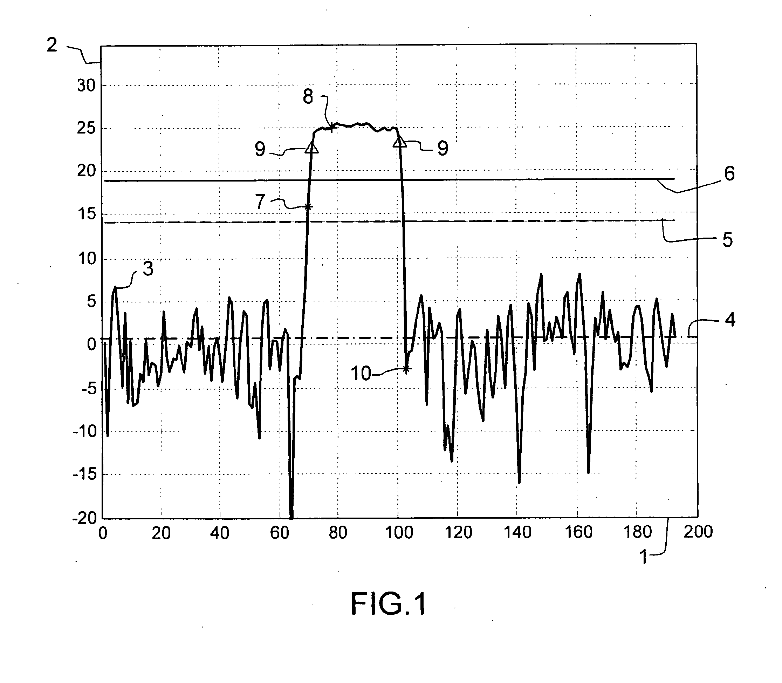

La figure 1 montre, par un diagramme, un signal radioélectrique comportant une impulsion pertinente. A titre d'exemple non limitatif, la description qui suit se rapporte notamment à la détection de l'impulsion pertinente représentée sur la figure 1 par le procédé selon l'invention, et à la détermination par le procédé selon l'invention, d'un intervalle de temps pendant lequel des mesures des paramètres de ladite impulsion représentée sur la figure 1 sont réalisées par le procédé selon l'invention.

Le procédé selon l'invention détecte des impulsions comprises dans le signal radioélectrique reçu par comparaison du signal reçu avec un seuil préalablement calculé garantissant une probabilité de détection et un taux de fausse alarme donnés. Ce seuil tient aussi compte du bruit présent (bruit thermique et facteur de bruit des étages de réception). En outre, deux paramètres peuvent encore permettre de diminuer ce seuil et ainsi améliorer la sensibilité :

- un facteur d'intégration qui effectue une moyenne glissante sur N échantillons du signal reçu ;
- la comparaison avec un nombre donné fixé a priori du nombre d'échantillons consécutifs au-dessus du seuil, pour prendre en compte une détection.

Après détection, le procédé selon l'invention recherche le niveau maximal de l'impulsion et calcule un seuil de mesure situé à mi-puissance de l'impulsion (c'est-à-dire pour N=1, un seuil de mesure situé 6 dB au-dessous du niveau maximal). Ce seuil de mesure sera la référence pour l'extraction des paramètres de l'impulsion. Pour chaque impulsion détectée, le procédé selon l'invention extrait notamment les informations suivantes :

- l'instant d'arrivée de l'impulsion, généralement désigné par l'acronyme anglo-saxon TOA pour « Time Of Arrival » ;
- la durée de l'impulsion ;
- le niveau moyen de puissance de l'impulsion.
  Le procédé selon l'invention peut encore extraire les mesures suivantes destinées à améliorer la caractérisation des impulsions :

- la variance du niveau de puissance de l'impulsion pour estimer par exemple l'excursion d'une éventuelle modulation d'amplitude ;
- la fréquence fine de l'impulsion élaborée à partir des incréments de phase mesurés ;
- les fréquences minimale et maximale dans l'impulsion, pour estimer par exemple l'excursion d'une éventuelle modulation de fréquence ;
- le nombre de sauts de phase, nombre d'états de phase, durée minimale entre sauts de phase (moment) pour identifier une éventuelle modulation de phase.

Ces informations sont synthétisées dans un descripteur d'impulsion appelé Impulsion Synthétique. Un tri des impulsions synthétiques effectué sur les critères de niveau et de durée d'impulsion peut être mis en oeuvre, afin de permettre de ne pas surcharger les traitements situés en aval (comme les traitements de désentrelacement et d'identification) avec des mesures médiocres obtenues à trop faible rapport signal à bruit, le seuil de mesure pouvant se situer jusqu'à 6 dB pour N=1 sous le seuil de détection. Le procédé selon l'invention délivre donc en sortie des impulsions synthétiques des impulsions successives détectées et triées.

Sur la figure 1, le diagramme comporte en outre un axe des abscisses 1 représentant le temps exprimé en numéro d'ordre des échantillons Zn et un axe des ordonnées 2 représentant le niveau de puissance exprimé en décibels du signal radioélectrique reçu. Une courbe 3 représente dans ce diagramme le niveau de puissance du signal radioélectrique reçu au cours du temps. Un seuil de détection 5 est représenté sur la figure 1. Lorsque le niveau de puissance du signal radioélectrique (courbe 3) dépasse le seuil de détection 5, le procédé selon l'invention cherche alors sur une fenêtre déterminée un niveau maximum 8 du signal. Le premier échantillon 7 après passage du seuil de détection 5 est représenté par une étoile sur la figure 1. Dans l'exemple de la figure 1, le niveau maximum 8 du signal, c'est-à-dire le niveau maximum 8 de l'impulsion, est recherché sur les 15 échantillons qui suivent le passage du seuil de détection 5. A partir du niveau maximum 8 de l'impulsion, un seuil de mesure 6 est défini, sensiblement sélectionné dans le cas présent à -6 dB par rapport au niveau maximum 8. Ce seuil de mesure 6 est alors utilisé pour la mesure de l'ensemble des paramètres. Sur la figure 1, sont représenté deux triangles matérialisant un intervalle de temps 9 de mesure des paramètres de l'impulsion. Un seuil d'extinction 4 est défini par rapport au bruit référencé à 0 dB, permettant ainsi d'identifier, lorsque le niveau de puissance du signal radioélectrique (courbe 3) descend en dessous du seuil d'extinction 4, l'instant du dernier passage sous le seuil de mesure 5 avant extinction. Le premier échantillon 10 après le passage du seuil de détection 5 est représenté par une étoile sur la figure 1. Pour cela, à chaque passage sous le seuil de mesure 5, les mesures en cours sont mémorisées. Les mesures reprennent si le niveau de puissance du signal repasse au-dessus du seuil de mesure 5. Par exemple, pour considérer l'impulsion définitivement terminée, le passage de 3 échantillons successifs sous le seuil d'extinction 4 est nécessaire. Lors de l'extinction, les mesures en cours sont arrêtées en attendant l'arrivée d'une nouvelle impulsion. Lorsque le niveau de l'impulsion est proche du seuil de détection 5, le seuil de mesure 6 passe sous le seuil de détection 5, ce qui permet de faire des mesures sous le seuil de détection 5. Pour pouvoir réaliser cette anticipation de la mesure sur le passage du seuil de détection, un retard est appliqué systématiquement au signal représenté par la courbe 3.

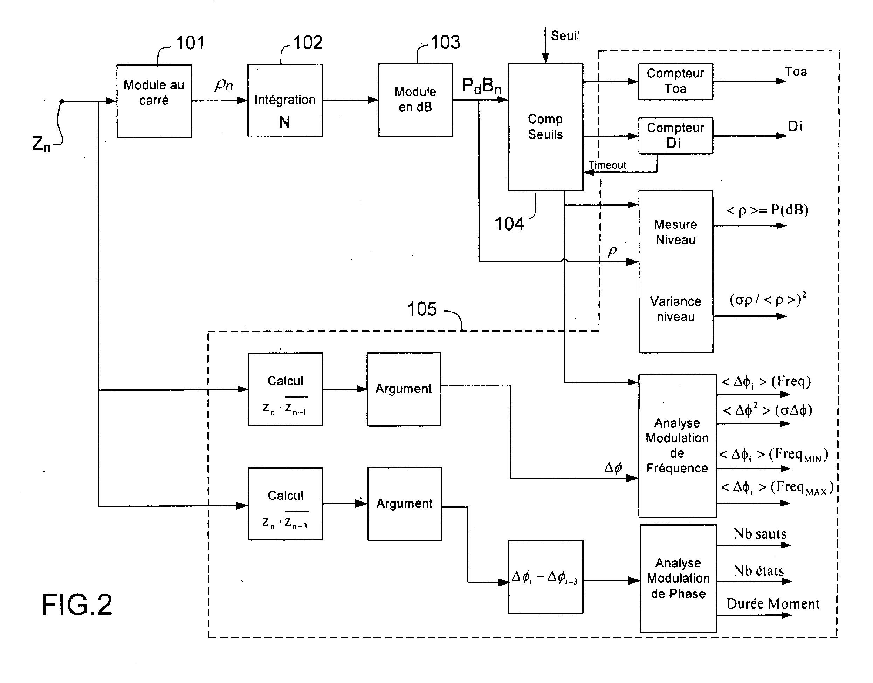

La figure 2 montre, par un synoptique, un mode de réalisation du procédé selon l'invention de détection et de mesure des paramètres de signaux radioélectriques. Les éléments identiques aux éléments déjà présentés sur les autres figures portent les mêmes références. Le procédé selon l'invention reçoit notamment en entrée les paramètres suivants :

- des échantillons complexes $Z_n$ du signal reçu ;
- REF_BRUIT indiquant la valeur du bruit référencé à 0 dB, obtenue par exemple suite à une phase d'étalonnage ;
- DELTA_SEUIL_DETECTION utilisé pour déterminer le niveau du seuil de détection 5 des impulsions ;
- DELTA_SEUIL_EXTINCTION utilisé pour déterminer le niveau du seuil d'extinction 4 ;
- MODE_AVEC_INTEGRATION indiquant si le procédé doit être utilisé dans un mode appelé mode avec intégration ;
- SEUIL_TRI_IS_NIV donnant une valeur de niveau en dessous de laquelle les impulsions synthétiques produites par le procédé selon l'invention doivent être éliminées ;
- VAL_DI_MIN donnant une valeur minimale de la durée de l'impulsion en dessous de laquelle les impulsions synthétiques produites doivent être éliminées.

Dans une étape 101, le module au carré $P_n$ de l'échantillon complexe $Z_n$ du signal reçu est calculé. Le module au carré $P_n$ peut être calculé en appliquant l'expression mathématique suivante : $P_n = |z_n|^2$ avec $z_n = I_n + i \cdot Q_n$. Dans une étape optionnelle 102 de calcul de la post-intégration, lorsque le paramètre MODE_AVEC_INTEGRATION indique que le procédé doit être utilisé dans le mode avec intégration, le module au carré $P_n$ est post-intégré. Le module au carré $P_n$ peut être intégré en moyenne glissante sur N échantillons, avec par exemple N=8. Que le module au carré $P_n$ soit post-intégré ou non, la valeur en décibels $PdB_n$ de son module au carré est ensuite calculée au cours d'une étape 103, en appliquant l'expression mathématique suivante : $PdB_n = 10 \times LOG_{10}(P_n)$.

Le procédé selon l'invention comporte une étape 104 de comparaison de la valeur en décibels $PdB_n$ aux seuils reçus. Au cours de cette étape 104, sont calculés :

- le seuil de détection 5, en additionnant le paramètre REF_BRUIT indiquant la valeur du bruit référencé à 0 dB et le paramètre DELTA_SEUIL_DETECTION ;
- le seuil d'extinction 4, en additionnant le paramètre REF_BRUIT indiquant la valeur du bruit référencé à 0 dB et le paramètre DELTA_SEUIL_EXTINCTION.

Au cours de l'étape 104, un critère de détection relatif à la présence d'une impulsion dans le signal radioélectrique est appliqué sur la valeur en décibels $PdB_n$. Lorsqu'un nombre i de valeurs en décibels $PdB_n$ consé-

cutives se situent au-dessus du seuil de détection 5, c'est-à-dire rempli la condition $PdB_n \geq SEUIL\_DETECTION$, alors le critère de détection est rempli. Dans le cas où le paramètre MODE_AVEC_INTEGRATION indique que le procédé ne doit pas être utilisé dans le mode avec intégration, le nombre i peut être sensiblement égal à 2. Dans le cas où le paramètre MODE_AVEC_INTEGRATION indique que le procédé doit être utilisé dans le mode avec intégration, i peut être choisi sensiblement égal à 12.

Au cours de l'étape 104, un critère d'extinction est appliqué sur la valeur en décibels $PdB_n$. Lorsqu'un nombre j de valeurs en décibels $PdB_n$ consécutives se situent au-dessous du seuil d'extinction 4, c'est-à-dire rempli la condition $PdB_n < SEUIL\_EXTINCTION$, ou lorsqu'un paramètre COMPTEUR_TEMPS est égal à 1, alors le critère d'extinction est rempli. Dans le cas où le paramètre MODE_AVEC_INTEGRATION indique que le procédé ne doit pas être utilisé dans le mode avec intégration, le nombre j peut être sensiblement égal à 3. Dans le cas où le paramètre MODE_AVEC_INTEGRATION indique que le procédé doit être utilisé dans le mode avec intégration, j peut être choisi sensiblement égal à 6.

Au cours de l'étape 104, lorsque le critère de détection est rempli, le niveau de puissance maximum NivMax de l'impulsion est recherché. Dans le cas où le paramètre MODE_AVEC_INTEGRATION indique que le procédé ne doit pas être utilisé dans le mode avec intégration, cette recherche a lieu par exemple :

- soit sur les valeurs en décibels $PdB_n$ correspondant aux 15 échantillons à partir du premier des deux échantillons consécutifs dont le niveau de puissance a dépassé le seuil de détection 5 ;
- soit sur l'ensemble des valeurs en décibels $PdB_n$ des échantillons jusqu'à ce que le critère d'extinction soit rempli si cette éventualité intervient avant le 15ème échantillon.

Dans le cas où le paramètre MODE_AVEC_INTEGRATION indique que le procédé doit être utilisé dans le mode avec intégration, cette recherche a lieu par exemple :

- soit sur les valeurs en décibels $PdB_n$ correspondant aux 32 échantillons à partir du premier des 12 échantillons consécutifs dont le niveau de puissance a dépassé le seuil de détection 5 ;
- soit sur l'ensemble des valeurs en décibels $PdB_n$ des échantillons jusqu'à ce que le critère d'extinction soit rempli si cette éventualité intervient avant le 32ème échantillon.

Au cours de l'étape 104, lorsque le critère de détection est rempli, le seuil de mesure 6 est déterminé. Dans le cas où le paramètre MODE_AVEC_INTEGRATION indique que le procédé ne doit pas être utilisé dans le mode avec intégration, le seuil de mesure 6 se situe sensiblement 6 dB en dessous de du niveau de puissance maximum NivMax de l'impulsion. Dans le cas où le paramètre MODE_AVEC_INTEGRATION indique que le procédé doit être utilisé dans le mode avec intégration, le seuil de mesure se situe 4 dB en dessous de du niveau de puissance maximum NivMax de l'impulsion.

Au cours de l'étape 104, dans le cas où le paramètre MODE_AVEC_INTEGRATION indique que le procédé ne doit pas être utilisé dans le mode avec intégration, une recherche du passage du seuil de mesure 6 débute sensiblement 6 échantillons avant le premier des 2 échantillons successifs ayant passé le seuil de détection 5. Dans le cas où le paramètre MODE_AVEC_INTEGRATION indique que le procédé doit être utilisé dans le mode avec intégration, la recherche du passage du seuil de mesure débute sensiblement 15 échantillons avant le premier des 12 échantillons successifs ayant passé le seuil de détection. Quel que soit le mode, les mesures sont limitées à la période précédente débutant au dernier instant où le critère d'extinction a été rempli.

Au cours de l'étape 104, dans le cas où le paramètre MODE_AVEC_INTEGRATION indique que le procédé ne doit pas être utilisé dans le mode avec intégration, la mesure débute au 1er échantillon ayant passé le seuil de mesure 6 et s'achève au dernier échantillon N, au-dessus du seuil de mesure 6 avant que le critère d'extinction soit rempli. Dans le cas où le paramètre MODE_AVEC_INTEGRATION indique que le procédé doit être utilisé dans le mode avec intégration, la mesure débute au 1er échantillon ayant passé le seuil de mesure et s'achève 8 échantillons avant le dernier passage sous le seuil de mesure avant extinction.

Dans une étape 105, est généré pour chaque impulsion reçue une impulsion synthétique comportant un ensemble d'informations et de mesures caractérisant ladite impulsion. Aussi, elle peut notamment comporter :

- la date de début de l'impulsion (ou TOA selon l'acronyme anglo-saxon pour Time of Arrival) ;
- la durée de l'impulsion, désigné généralement par l'acronyme DI ;
- la somme des puissances instantanées sur la durée de l'impulsion DI ;
- la somme des carrés des puissances instantanées sur la durée de l'impulsion DI ;
- la somme des incréments de phase sur la durée de l'impulsion DI ;
- la somme des carrés des incréments de phase sur la durée de l'impulsion DI ;
- la valeur minimale sur la durée de l'impulsion DI de la somme glissante (effectuée par exemple sur 32 échantillons) des incréments de phase ;
- la valeur maximale sur la durée de l'impulsion DI de la somme glissante (effectuée par exemple sur 32 échantillons) des incréments de phase ;
- le nombre total de sauts de phase sur la durée de l'impulsion DI ;
- le nombre d'états de phase pendant la durée de l'impulsion DI ;

- la durée minimale sur la durée de l'impulsion DI entre 2 sauts de phase consécutifs ;
- un indicateur de passage sous le seuil de mesure 6.

Les calculs de niveau moyen, de variance du niveau, de fréquence moyenne et de variance de fréquence sont obtenus à partir des sommes des puissances instantanées, des carrés des puissances instantanées, des incréments de phase et des carrés des incréments de phase. Il suffit de diviser ces dernières valeurs par la durée de l'impulsion. En outre, les calculs de fréquence et de phase pourront éliminer quelques échantillons au début et à la fin de l'intervalle de mesure, ces échantillons étant entachés d'erreur.

A titre d'exemple, l'instant de mesure de la date de début de l'impulsion TOA peut être défini par rapport au premier échantillon ayant passé le seuil de mesure 6. La mesure de la durée de l'impulsion peut être réalisée à l'aide d'un compteur de capacité, par exemple, égale à 20 bits. La durée de l'impulsion DI correspond à la durée s'écoulant entre la date de début de l'impulsion et la réception du dernier échantillon au-dessus du seuil de mesure 6. Si par exemple, ce dernieréchantillon correspond à la limite de capacité du compteur (soit , car exemple, le 1048576$^{ème}$ échantillon pour un compteur 20 bits), alors le paramètre COMPTEUR_TEMPS est mis à 1. Si le paramètre COMPTEUR_TEMPS est mis à 1, la fin de la mesure est décrétée, les informations nécessaires à la constitution de l'impulsion synthétique sont mémorisées. La somme des puissances instantanées sur la durée de l'impulsion DI peut être calculée en appliquant l'expression mathématique suivante : $\sum_{n=1}^{N} PdB_n$ .

La somme des carrés des puissances instantanées sur la durée de l'impulsion DI peut être calculée en appliquant l'expression mathématique suivante : $\sum_{n=1}^{N} (PdB_n)^2$ .

La somme des incréments de phase pour la mesure de fréquence peut être calculée en appliquant l'expression mathématique suivante : $\sum_{n=2}^{N} \left( Arg(z_n \bullet \overline{z_{n-1}}) \right)$.

La somme des carrés des incréments de phase pour la mesure de l'écart type de la fréquence peut être calculée en appliquant l'expression mathématique suivante :

$$\sum_{n=2}^{N} \left( Arg(z_n \bullet \overline{z_{n-1}}) \right)^2 .$$

La somme des incréments de phase pour la mesure de fréquence minimale, intégrée sur 32 échantillons, pour $n \in [32;N]$ peut être calculée en appliquant l'expression mathématique suivante :

$$\min\left( \sum_{j=n-31}^{n} \left( Arg(z_j \bullet \overline{z_{j-1}}) \right) \right).$$

La somme des incréments de phase pour la mesure de fréquence maximale intégrée sur 32 échantillons pour $n \in [32;N]$ peut être calculée en appliquant l'expression mathématique suivante :

$$\max\left( \sum_{j=n-31}^{n} \left( Arg(z_j \bullet \overline{z_{j-1}}) \right) \right).$$

Les écarts de phase pour les mesures de modulation de phase pour $n \in [7;N]$ peuvent être calculés en appliquant l'expression mathématique suivante :

$$\phi_n = Arg(z_n \bullet \overline{z_{n-3}})$$
$$\Delta\phi_n = \phi_n - \phi_{n-3}$$
.

Le nombre de sauts et d'états de phase pour les mesures de modulation de phase peut être déterminé en appliquant la logique suivante :

- Lorsque $|\Delta\phi_n - \Delta\phi_{n-3}| \leq 50°$, le saut de phase détecté est de 0 ° ;
- Lorsque $50° < |\Delta\phi_n - \Delta\phi_{n-3}| < 140°$, le saut de phase détecté est de 90°;
- Lorsque $140° \leq |\Delta\phi_n - \Delta\phi_{n-3}|$, le saut de phase détecté est de 180°.

Un saut est comptabilisé lorsque l'un ou les deux évènements ont lieu sur une fenêtre glissante de 3 échantillons. Le nombre de sauts maximal comptabilisé par mesure est de 32. Le nombre d'états de phase est donné par la logique suivante :

- aucun saut n'a été observé : 1 seule phase ;
- les seuls sauts de phase de 90° observés correspondent à des sauts de phase de 180° : 2 phases ;
- seuls des sauts de phase de 90° ont été observés : 4 phases.

La durée du moment peut être obtenue par un compteur, par exemple un compteur 8 bits, en mesurant l'intervalle de temps entre deux sauts de phase. La durée du moment est la valeur minimale de cet intervalle de temps sur la durée de l'impulsion DI.

L'indicateur de passage sous le seuil de mesure 6 peut être activé lorsque le signal passe momentanément, en cours de mesure, sous le seuil de mesure 6.

A chaque passage sous le seuil de mesure 6 ou lorsque le paramètre COMPTEUR_TEMPS est mis à 1 et dans l'attente que le critère d'extinction soit éventuellement rempli, les valeurs courantes des différentes mesures sont mémorisées. Les mesures courantes continuent jusqu'à ce que le critère d'extinction soit rempli.

De nombreuses autres mesures effectuées dans l'impulsion peuvent être réalisées en temps réel comme par exemple des mesures pour caractériser les modulations d'amplitude, les modulations de fréquence, les modulations de phase ainsi que des mesures pour différencier des impulsions superposées.

Il est en outre possible d'implémenter un tri des impulsions synthétiques. Par exemple, les impulsions synthétiques dont la valeur de durée d'impulsion DI est inférieure au paramètre VAL-DI-MIN, typiquement 20 échantillons en mode avec intégration, sont supprimées. Si le paramètre VAL-DI-MIN vaut 0 alors aucun tri n'est effectué. Les impulsions synthétiques peuvent encore être triées en fonction du niveau moyen. Ainsi, les impulsions synthétiques dont la valeur de niveau moyen est inférieure au paramètre SEUIL_TRI_IS_NIV, sont supprimées.

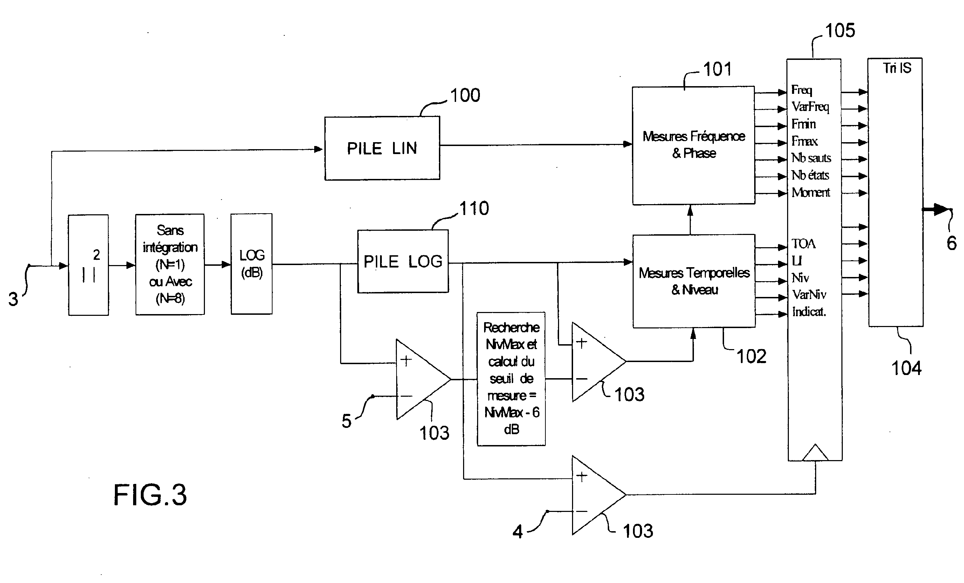

La figure 3 illustre par un synoptique un dispositif de détection et de mesures des paramètres de signaux radioélectriques. Les éléments identiques aux éléments déjà présentés sur les autres figures portent les mêmes références. Le dispositif selon l'invention est notamment adapté à la mise en oeuvre du procédé selon l'invention de détection et de mesures des paramètres de signaux radioélectriques. En particulier, le dispositif reçoit en entrée le signal radioélectrique reçu et délivre en sortie des impulsions synthétiques. Le dispositif comporte notamment des moyens de mesures de fréquence et de phase 101, des moyens de mesures temporelles et de niveau 102, des moyens de comparaisons 103, des moyens de tris d'impulsions synthétiques 104, et des moyens de mémorisation d'impulsions synthétiques. Le dispositif comporte notamment deux types de mémoires : une pile LIN 100 et une pile LOG 110. La pile LIN 100 et la pile LOG 110 sont de type « Premier entré, premier sorti », généralement désigné par l'acronyme anglo-saxon FIFO pour First In/First Out. La pile LOG 110 compense, pour les échantillons convertis en décibels, les latences de recherche du niveau maximum. En outre la pile LOG 110 permet l'anticipation de la mesure, une fois le seuil de mesure 6 calculé. La pile LIN 100 compense, pour les échantillons complexes utilisés pour les mesures de phase/fréquence les mêmes latences que précédemment ainsi que celles nécessaires aux calculs de puissance, d'intégration et de conversion logarithme en décibels.

**Revendications**

1. Procédé de détection et de mesure des paramètres d'un signal radioélectrique échantillonné ($Z_n$) dans lequel :

    • chaque valeur ($PdB_n$) des échantillons ($Z_n$) du signal radioélectrique étant comparée (104) à un seuil de détection (5), le critère de détection, relatif à la présence d'une impulsion dans le signal radioélectrique, étant rempli lorsque la valeur ($PdB_n$) des échantillons ($Z_n$) est supérieure ou égale au seuil de détection (5) ;
    • chaque valeur ($PdB_n$) des échantillons ($Z_n$) du signal radioélectrique étant comparée (104) à un seuil d'extinction (4), le critère d'extinction étant rempli lorsque la valeur ($PdB_n$) des échantillons ($Z_n$) est inférieure au seuil d'extinction (4) ;

**caractérisé en ce que** :

    • lorsque le critère de détection est rempli, un seuil de mesure (6) est défini à un niveau donné en dessous du niveau de puissance maximum (NivMax) de l'impulsion, ledit niveau de puissance maximum (NivMax) étant recherché sur un nombre donné de valeurs ($PdB_n$) des échantillons ($Z_n$) à partir du premier échantillon dont le niveau de puissance a dépassé le seuil de détection (5) et
    • une impulsion synthétique est générée (105) comportant un ensemble d'informations et de mesures caractérisant chaque impulsion reçue, les mesures étant effectuées sur une période débutant au premier échantillon ayant passé le seuil de mesure (6) et s'achevant au dernier échantillon N au-dessus du seuil de mesure (6) avant que le critère d'extinction soit rempli.

2. Procédé selon la revendication 1 **caractérisé en ce que** le seuil de détection (5) est obtenu (104) en additionnant d'une part un paramètre REF_BRUIT indiquant la valeur du bruit référencé à 0 dB et d'autre part un paramètre DELTA_SEUIL_DETECTION, le seuil d'extinction (4) est obtenu en additionnant le paramètre REF_BRUIT et un paramètre DELTA_SEUIL_EXTINCTION.

3. Procédé selon l'une quelconque des revendications précédentes **caractérisé en ce que** l'impulsion synthétique comporte un ensemble d'informations et de mesures caractérisant l'impulsion parmi :

    • la date de début de l'impulsion ;
    • la durée de l'impulsion ;
    • la somme des puissances instantanées sur la durée de l'impulsion ;
    • la somme des carrés des puissances instantanées sur la durée de l'impulsion ;
    • la somme des incréments de phase sur la durée de l'impulsion ;
    • la somme des carrés des incréments de phase sur la durée de l'impulsion ;
    • la valeur minimale sur la durée de l'impulsion de la somme glissante des incréments de phase ;
    • la valeur maximale sur la durée de l'impulsion DI de la somme glissante des incréments de phase ;
• le nombre total de sauts de phase sur la durée de l'impulsion ;
• le nombre d'états de phase pendant la durée de l'impulsion ;
• la durée minimale sur la durée de l'impulsion entre deux sauts de phase consécutifs ;
• un indicateur de passage sous le seuil de mesure (6).

4. Procédé selon l'une quelconque des revendications précédentes **caractérisé en ce que** les impulsions synthétiques dont la valeur de durée d'impulsion DI est inférieure à un paramètre VAL_DI_MIN sont supprimées.

5. Procédé selon l'une quelconque des revendications précédentes **caractérisé en ce que** les impulsions synthétiques dont la valeur de niveau moyen est inférieure à un paramètre SEUIL_TRI_IS_NIV sont supprimées.

**Claims**

1. A process for detecting and measuring parameters of a sampled radioelectric signal ($Z_n$) wherein:

• each value ($PdB_n$) of the samples ($Z_n$) of the radioelectric signal is compared (104) with a detection threshold (5), the detection criterion, relative to the presence of a pulse in the radioelectric signal, being fulfilled when the value ($PdB_n$) of the samples ($Z_n$) is greater than or equal to the detection threshold (5);
• each value ($PdB_n$) of the samples ($Z_n$) of the radioelectric signal is compared (104) with an extinction threshold (4), the extinction criterion being fulfilled when the value ($PdB_n$) of the samples ($Z_n$) is less than the extinction threshold (4);

**characterised in that**:

• when the detection criterion is fulfilled, a measuring threshold (6) is defined at a given level below the maximum power level (NivMax) of the pulse, said maximum power level (NivMax) being found on a given number of values ($PdB_n$) of samples ($Z_n$) starting from the first sample in which the power level has exceeded the detection level (5), and,
• a synthetic pulse is generated (105) comprising a set of information and of measured values characterising each received pulse, the measurements being completed over a period starting from the first sample which exceeded the measuring threshold (6) and ending at the last sample N above the measuring threshold (6) before the extinction criterion has been fulfilled.

2. The process according to claim 1, **characterised in that** the detection threshold (5) is obtained (104) on the one hand by adding a REF_BRUIT parameter indicating the noise value referenced at 0 dB and on the other hand a DELTA_SEUIL_DETECTION parameter, the extinction threshold (4) is obtained by adding the REF_BRUIT parameter and a DELTA_SEUIL_DETECTION parameter.

3. The process according to any one of the preceding claims, **characterised in that** the synthetic pulse comprises a set of information and of measured values characterising the pulse, including:

• the pulse start date;
• the pulse duration;
• the sum of instantaneous powers over the pulse duration;
• the sum of the squares of the instantaneous powers over the pulse duration;
• the sum of the phase increments over the pulse duration;
• the sum of the squares of the phase increments over the pulse duration;
• the minimum value over the pulse duration of the sliding sum of the phase increments;
• the maximum value over the pulse duration DI of the sliding sum of the phase increments;
• the total number of phase jumps over the pulse duration;
• the number of phase states during the pulse duration;
• the minimum duration over the pulse duration between two consecutive phase jumps;
• an indicator of passage below the measuring threshold (6).

4. The process according to any one of the preceding claims, **characterised in that** the synthetic pulses with a pulse duration value DI below a VAL_DI_MIN parameters are suppressed.

5. The process according to any one of the preceding claims, **characterised in that** the synthetic pulses with an average level value below a SEUIL_TRI_IS_NIV parameter are suppressed.

**Patentansprüche**

1. Verfahren zum Erfassen und Messen von Parametern eines abgetasteten radioelektrischen Signals ($Z_n$), wobei:

• jeder Wert ($PdB_n$) der Samples ($Z_n$) des radio-

elektrischen Signals mit einer Erfassungsschwelle (5) verglichen (104) wird, wobei das Erfassungskriterium, relativ zur Anwesenheit eines Impulses in dem radioelektrischen Signal, dann erfüllt ist, wenn der Wert ($PdB_n$) der Samples ($Z_n$) gleich oder höher als die Erfassungsschwelle (5) ist;

• jeder Wert ($PdB_n$) der Samples ($Z_n$) des radioelektrischen Signals mit einer Löschschwelle (4) verglichen (104) wird, wobei das Löschkriterium dann erfüllt ist, wenn der Wert ($PdB_n$) der Samples ($Z_n$) geringer ist als die Löschschwelle (4);

**dadurch gekennzeichnet, dass**:

• wenn das Erfassungskriterium erfüllt ist, eine Messschwelle (6) auf einem bestimmten Pegel unterhalb des maximalen Leistungspegels (NivMax) des Impulses definiert wird, wobei der maximale Leistungspegel (NivMax) bei einer bestimmten Anzahl von Werten ($PdB_n$) von Samples ($Z_n$) gefunden wird, beginnend mit dem ersten Sample, dessen Leistungspegel den Erfassungspegel (5) überschritten hat, und

• ein synthetischer Impuls erzeugt (105) wird, der einen Satz von jedem empfangenen Impuls charakterisierenden Informationen und Messwerten umfasst, wobei die Messungen über eine Periode beginnend mit dem ersten Sample, das die Messschwelle (6) überschritten hat, und endend mit dem letzten Sample N über der Messschwelle (6) durchgeführt werden, bevor das Messkriterium erfüllt ist.

2. Verfahren nach Anspruch 1, **dadurch gekennzeichnet, dass** die Erfassungsschwelle (5) einerseits durch Hinzufügen eines REF_BRUIT Parameters, der den mit 0 dB referenzierten Geräuschwert anzeigt, und andererseits eines DELTA_SEUIL_ DETECTION Parameters erhalten (104) wird und die Löschschwelle (4) durch Hinzufügen des REF_ BRUIT Parameters und eines DELTA_SEUIL_DETECTION Parameters erhalten wird.

3. Verfahren nach einem der vorherigen Ansprüche, **dadurch gekennzeichnet, dass** der synthetische Impuls einen Satz von den Impuls charakterisierenden Informationen und Messwerten umfasst, einschließlich:

• dem Impulsstartzeitpunkt;
• der Impulsdauer;
• der Summe von Momentanleistungen über die Impulsdauer;
• der Summe der Quadrate der Momentanleistungen über die Impulsdauer;
• der Summe der Phaseninkremente über die Impulsdauer;

• der Summe der Quadrate der Phaseninkremente über die Impulsdauer;
• dem Mindestwert über die Impulsdauer der gleitenden Summe der Phaseninkremente;
• dem Maximalwert über die Impulsdauer DI der gleitenden Summe der Phaseninkremente;
• der Gesamtzahl von Phasensprüngen über die Impulsdauer;
• der Anzahl von Phasenzuständen während der Impulsdauer;
• der Mindestdauer über die Impulsdauer zwischen zwei aufeinander folgenden Phasensprüngen;
• einem Indikator für das Fallen unter die Messschwelle (6).

4. Verfahren nach einem der vorherigen Ansprüche, **dadurch gekennzeichnet, dass** die synthetischen Impuse, deren Impulsdauerwert DI kleiner ist als ein VAL_DI_MIN Parameter, unterdrückt werden.

5. Verfahren nach einem der vorherigen Ansprüche, **dadurch gekennzeichnet, dass** die synthetischen Impuse, deren mittlerer Pegelwert kleiner ist als ein SEUIL_TRI_IS_NIV Parameter, unterdrückt werden.

EP 2 017 642 B1

FIG.1

FIG.2

FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0261779 A